# NEW EUROPEAN PATENT SPECIFICATION

(11) **EP 3 651 295 B2**
(45) Date of publication and mention of the opposition decision: **22.10.2025**
(45) Mention of the grant of the patent: 11.05.2022
(21) Application number: 18204701.9
(22) Date of filing: 06.11.2018
(51) Int. Cl.: H02G 15/08, H01R 31/08, H01R 9/24

(54) **STRUCTURAL IMPROVEMENTS OF LOW VOLTAGE UNDERGROUND LINK BOXES**
STRUKTURELLE VERBESSERUNGEN VON UNTERIRDISCHEN NIEDERSPANNUNGSVERBINDUNGSKÄSTEN
AMÉLIORATIONS STRUCTURALES DE BOÎTIERS DE LIAISON SOUTERRAINS BASSE TENSION

(43) Date of publication of application: 13.05.2020
(73) Proprietor: Tyco Electronics UK Ltd, Wiltshire SN3 5HH (GB)
(72) Inventor: BARNETT, Gary, Ashby De La Zouch, Leicestershire LE65 1JH (GB); EATON, David, Suffolk IP5 1BG (GB); LEES, Robert, Essex CM7 3HS (GB)
(74) Representative: Grünecker Patent- und Rechtsanwälte PartG mbB

(56) References cited:
- EP-A2- 1 681 748
- WO-A1-02/29932
- WO-A1-03/081727
- JP-A- 2001 238 328
- KR-B1- 100 978 866
- US-B1- 6 573 455
- SICAME: "Link Boxes", 31 July 2017 (2017-07-31), XP055585126, Retrieved from the Internet <URL:https://www.sicame.co.uk/pdf/section6/6.01a-6.02a.pdf> [retrieved on 20190502]
- SICAME UK: "LINK BOXES", 30 June 2017 (2017-06-30), XP055518031, Retrieved from the Internet <URL:https://www.sicame.co.uk/pdf/section6/6.01-6.02.pdf> [retrieved on 20181023]

## Description

The invention relates to an inner phase housing for an underground link box, wherein the inner phase housing comprises at least one phase pocket in which phase link posts are provided, a plurality of conductor rods for connecting at least two low-voltage cables and a base section to which the at least one phase pocket is mounted.

The invention further relates to an assembly for an underground link box, comprising a housing part for receiving an inner phase housing.

Inner phase housings and assemblies for underground link boxes are known from the art. Those prior art solutions may fail because of an insufficient stability against ground movement. Further, the insufficient stability of the underground link box or the construction of the inner phase housing of the art may result in water ingress due to an insufficient or damaged moisture sealing.

Water ingress and short circuiting of the different phases of the alternating current lines connected and/or switched by the underground link box may result in catastrophic (explosive) failure that is to be avoided. Underground link boxes are known for example from documents "Sicame: 'Link Boxes', 31 July 2017, XP055585126, Retrieved from URL https://www.sicame.co.uk/pdf/section6/ 6.01a-6.02a.pdf on 2019-05-02" and "Sicame UK: 'Link Boxes', 30 June 2017, XP055518031, Retrieved from URL https://www.sicame.co.uk/pdf/section6/6.01-6.02.pdf on 2018-10-23". Other examples of inner phase housing for underground link boxes are known from documents EP1681748A2, WO02/29932A1, WO03/081727A1 and KR100978866B1.

An object of the present invention is therefore to provide an inner phase housing and an assembly for an underground link box with structural improvements, increased resistivity against water ingress and an elongated service life.

The above problems are overcome by the invention for the inner phase housing according to claim 1

For the assembly for underground link boxes mentioned in the beginning, the above problems are overcome by the invention in that the inner phase housing is configured according to the inventive inner phase housing.

Typically, inner phase housings of the art are constructed using moldings that are assembled around electrical components like the phase link posts or connector rods and then encapsulated in a resin system. This process is complex and may result in moisture ingress because of a plurality of joints in between the individual moldings. The inventive inner phase housing contrarily provides a one-piece component, which does not require additional assembly steps when installing the inner phase housing to an underground link box. Thus, the reliability of the inner phase housing and consequently the underground link box may be improved. An inventive assembly applying the inventive inner phase housing provides the same advantages.

By means of the feed-through protrusions, the inner phase housing provides a shaped insulation opening for the conductor rods.

The conductor rods are integrally provided with the inner phase housing. During assembly, such an inner phase housing merely requires to contact and seal the different phase-cables of the three-phase cable. The inner phase housing may thus be pre-tailed. The inner phase housing may further already be provided with at least one pre-tailed three-phase cable, preferably at least two pre-tailed three-phase cables, wherein the cable or cables are connected to the connector rods and the corresponding connection may be sealed against water ingress.

The inventive inner phase housing and the inventive assembly for underground link boxes may be further improved by adding one or more of the following technical features. Each of those technical features has its own technical effect. Individual technical features may be arbitrarily and independently combined with any of the additional technical features mentioned below. Additionally, specific technical features may be omitted if the technical effect obtained with the omitted technical feature is not relevant for the specific embodiment.

A phase pocket is known in the art to be understood as a three-dimensional volume surrounded by phase pocket walls, wherein at least two phase link posts may extend into said volume. The phase link posts may be provided for electrically connecting one phase of a preferably three-phase alternating current cable. Preferably, the phase pocket only opens in a direction pointing away from the base section. The side of the phase pocket opposite the opening is mounted or attached to the base section and sealed against water ingress due to the integrally formed inner phase housing.

The inner phase housing is to be understood as a one-piece component, an integral structure, respectively an inner phase housing which is integrally formed. It may also be referred to as integral inner phase housing. It may in particular be formed using a high-temperature polymer or a cast epoxy system.

The inner phase housing is injection molded around the phase link posts and the conductor rods. The inner phase housing thus one single part, which does not require additional sub-assembly steps. Such an inner phase housing may be installed to an underground link box in an easy and time-saving manner.

The feed-through protrusions protrude to both sides of the inner phase housing. They may protrude in particular symmetrically and may be oriented parallel to each other. The feed-through protrusions are tubes with a circular, square or rectangular cross section having a free cross sectional area according to the cross sectional area of the conductor rods received. Within this disclosure, a rod is therefore not only to be understood as or limited to an elongated structure having a round or circular cross section. Elongated structures with a square, rectangular or polygonal cross sectional area are also referred to as a rod.

The feed-through protrusions extends from the base section of the inner phase housing and may be provided in a number of multiple of three for each side. A further ground connector may be provided to electrically connect a grounding or earth of the low-voltage cable.

Portions of the conductor rods and/or the ground connector may be completely encapsulated by the tubular feed-through protrusions

The feed-through protrusions may in particular be provided underneath and/or spaced apart from a bottom of the inner phase housing. The bottom of the inner phase housing is to be understood as the lowest part of the inner phase housing in its center, when seen in a direction from the opening of the at least one phase pocket towards the base section.

In the assembled state of the inner phase housing, the bottom of the inner phase housing corresponds to its underside. In the installed state, the feed-through protrusions therefore may extend in a downward direction beyond the bottom of the inner phase housing as seen in gravity direction.

If directions as up and down are used within this disclosure, said directions are referred to gravity and in particular to the correct orientation of the inner phase housing, i.e. the orientation in which it is installed or assembled in accordance with its specifications. Thus, the up or upward direction and the down or downward direction are oriented essentially perpendicular to the base section of the inner phase housing and are directed in opposite directions. The upward direction corresponds to a direction from the base section towards the opening of the at least one phase pocket.

In a further advantageous embodiment of the inventive inner phase housing, busbars may be provided. The busbars are preferably provided in the base section of the integrally formed phase housing and are preferably encapsulated. The busbars may be integrated into the base section of the inner phase housing, wherein those encapsulated busbars may protrude from a bottom of the base section.

By means of the busbars a phase may be provided to one or more phase link posts in an easy manner. The expression providing a phase is to be understood as to provide a voltage level of one phase of the three-phase cable or via the busbars to at least one phase link post. The busbars may in particular not provide a bridge between the two sides of the inner phase housing.

The busbars may be completely encapsulated in the one-piece inner phase housing, i.e. they may be integrated into the base section. The busbars may further protrude from the bottom of the base section.

The above-described embodiments of the inner phase housing are adapted to be received in the assembly for an underground link box.

The assembly may in particular comprise a lower housing part and an upper housing part for receiving the inner phase housing.

The lower housing part and the upper housing part for an underground link box may form an underground link box housing. Within said underground link box housing further elements may be comprised in addition to the inner phase housing.

An assembly comprising the inventive inner phase housing has the advantage that the assembly and ultimately the entire underground link box provide redundancy in the protection against water ingress.

Another advantageous embodiment of the inventive assembly may be characterized by a stiffening structure, which is integrally formed with the lower housing part and/or the upper housing part at a planar face thereof.

This embodiment of the inventive assembly for underground link boxes may also improve the reliability of the underground link box. In the prior art solutions, the ground has to be prepared after excavation and a structural, rigid foundation, e.g. in the form of a pad or slab is required for providing the necessary strength of the underground link box.

A faulty installation of such a foundation or, in cases when it is not installed at all, fissures or cracks in the underground link box housing and unwanted water ingress may occur. This may lead to a failure of the underground link box. The inventive stiffening structure may prevent such failures and may provide an easier installation of the underground link box.

Further, in prior art solutions, the stability of the underground link box has been increased by filling them with a resin or bitumen for insulation of the connection between incoming cables, thereby providing the required mechanical strength. As the above embodiment of the inventive assembly provides the required strength via the stiffening structure, different means for insulating the connection of the incoming cables into underground link boxes may be applied. Thus, the general approach of pouring resin into the underground link box is purely optional and different insulation means or different filling materials may be applied.

Said stiffening structure has thus the advantage over prior art solutions that a hardening resin, which, in the prior art, provides the mechanical stability of an installed underground link box may be omitted or replaced by another filling agent. The alternative filling agent is not required to provide stability to the installed underground link box but may be only applied as a sealing agent against water ingress. This in turn has the advantage that a less expensive filling medium may be applied. Additionally, the alternative filling medium may be easier to handle, as conventional resins are for instance two-component materials that are usually prepared at the installation site of the underground link box. Further, as usually applied resin materials may comprise isocyanates, the application of different filling agents is more environmental friendly.

The stiffening structure is configured to increase the mechanical stability of the housing part, in particular its stiffness. That is to say that the stiffening structure increases the mechanical stability, decreases the flexibility and increases the torsion resistance of the housing part. The inventive assembly for an underground link box therefore does not require an additional foundation that is applied below the lower housing part of the assembled underground link box.

Such an assembly may therefore provide an easier installation of an underground link box. It comprises less installation steps and may therefore be more user-friendly, cheaper and faster.

If an underground link box of the art is accidentally installed without a foundation or slab, forces due to ground movement or due to forces exerted from the earth's surface (e.g. a lorry parking on a pavement) may cause bending of the housing parts of said underground link box. Such a bending may in turn result in cracks, water ingress and a failure of the damaged link box. In particular, when resin filled link boxes of the art are considered, cracks within the underground link box housing may trigger cracks in the hardened resin, such that water may enter through the housing part and through the hardened resin towards the phase link posts or the busbars.

The stiffening structure of the inventive assembly may comprise at least one stiffening protrusion and/or at least one stiffening recession.

According to a further and advantageous embodiment of the inventive assembly, the stiffening structure may comprise at least one rib protruding away from the housing part and/or at least one trough-like depression deepened into the housing part, the ribs and/or depression being integrally formed with the housing part.

Such stiffening structures as ribs or depressions may extend to the outside of the housing part (ribs) or towards the inside of the housing part in case of the trough-like depressions. The outside is to be understood as a portion or area located outside of the volume that is formed by the underground link box housing. In case of the lower housing part and in the correctly installed state of the underground link box, the downward direction (related to gravity) directs from the lower part housing to the outside. Correspondingly, the upward direction is oriented towards the outside in case of the upper housing part.

The stiffening structure may further comprise a hollow receptacle, which is adapted for being filled with a hardening armoring material. Such a hollow receptacle may be integrally formed with the corresponding housing part. The receptacle is preferably accessible in order to fill in the hardening armoring material. After hardening, the material filled in acts as an armoring that increases the mechanical stability of the corresponding housing part.

The hollow receptacle and/or the at least one stiffening protrusion and/or at least one stiffening recession may preferably be provided underneath a base plate of the lower housing part or above a top plate of the upper housing part. For both housing parts, said base or top plate may provide one side facing inside the assembled underground link box, wherein the opposite side faces to the outside.

On the side facing to the outside, the stiffening structure may be integrally provided. The inventive assembly, respectively the stiffening structure may in particular comprise a plurality of ribs and/or depressions, which are intersecting each other. That is to say that the plurality of ribs and/or depressions may form a web that provides mechanical stability for most possible torsional forces acting upon the underground link box. In other words, torsional forces exerted on the underground link box around an axis oriented essentially parallel to the three-phase cables to be connected may as well be compensated for as torsional forces acting around an axis oriented perpendicular to it. The web further allows to compensate for any torsional force acting on the underground link box comprising the inventive assembly.

In a further advantageous embodiment of the inventive assembly the lower housing part may comprise at least one of a blind hole and a threaded blind hole for fixing the inner phase housing to the lower housing part. In case of a blind hole, a press-fit or a friction fit may be provided between a bolt or similar structure and the corresponding blind hole. In case of a threaded blind hole a corresponding screw may be applied to fix the inner phase housing to the lower housing part. The blind hole or threaded blind hole is integrally formed with the inner phase housing.

The blind hole or threaded blind hole may be provided on sockets that are elevated in the upward direction above the inner surface of the lower housing part.

Such a blind hole or threaded blind hole has the advantage that no water ingress through a through-hole may occur. The blind hole or threaded blind hole may be integrally formed with the lower housing part. Thus, also the thread of such a threaded blind hole may be integrally formed with the lower housing part.

In a further advantageous embodiment of the inventive assembly, drainage tubes may be provided that are connectable to drainage holes of the lower housing part. The drainage tubes may be either integrally formed with the inner phase housing or may be separate parts. They may protrude away from the inner side of the lower housing part that faces away from the stiffening structure in the direction of the upper housing part. In other words, the drainage tubes, when installed, protrude away from the lower housing part in an upward direction, given that the lower housing part is positioned/oriented such as it would be installed in the underground link box.

Drainage holes may be applied in underground link boxes that provide an open concept, i.e. are adapted to be filled with water during rain. In those underground link boxes, the short circuit of different phases is prevented by a diving bell lid underneath which a pocket of air is confined, the air pocket preventing the phase link posts from the contact with water. When the water level falls to a level below the underground link box, the drainage holes allow the residual water remaining in the inside of the underground link box to be drained out of it.

In a further advantageous embodiment, if the underground link box is filled with a resin or another filling agent, the drainage tubes may extend from the bottom of the lower housing part upward and may extend to a fill-level of the resin orfilling agent. This embodiment has the advantage that water that accidentally enters a filled underground link box or condensation water formed within the underground link box may be drained out of the underground link box through said drainage tubes and the drainage holes to which the drainage tubes are connected. The end of the drainage tubes may in particular be flush with the resin fill level. Further, a funnel-type structure may be provided at the end of the drainage tubes to facilitate drainage of water from the inside of the underground link box to the outside.

In a further advantageous embodiment of the inventive assembly at least one cable reducing shim may be provided, which is adapted to be inserted into a cable-receiving opening of the lower housing part and/or the upper housing part. The cable receiving opening may be provided in each end section of the lower housing part and the upper housing part, wherein both housing parts, when attached to each other may form a circular cable reducing opening, wherein each of the housing parts may provide a semi-circle opening only.

Said end section may comprise a first configuration, in which no cable shim may be received within the cable-receiving opening. In this first configuration, the cable receiving opening or cable-receptacle-opening may provide a first free diameter. In a second configuration, a cable shim may be received within the cable-receiving opening, whereby the cable receiving opening may provide a second free diameter being smaller than the first free diameter. It is therefore possible, to apply one and the same underground link box for different types of cables, differing in their diameter, that are to be connected to each other. The cable shim may further comprise a material suitable for sealing the receiving opening against water ingress. Additionally or alternatively, a separate sealing member may be provided for sealing the cable-receiving opening against water ingress.

The inner phase housing according to the invention or the inner phase housing applied in the inventive assembly is preferably an injection molded member. Injection molding of the inner phase housing has the advantage that the one piece inner phase housing or one-piece components may be fabricated or manufactured easily, fast, simple and cost-effective. The integral structure of the inner phase housing thus may highly decrease the possibility of moisture ingress, as such an inner phase housing provides no joints between individual parts as it is a one-piece element.

In the following, the inventive inner phase housing and assembly will be described by exemplary embodiments shown in the accompanying figures. Individual technical features shown in the figures may be combined with each other arbitrarily and independently. Consequently, individual technical features of the exemplary embodiments may be omitted if the technical effect obtained by the omitted technical feature is not relevant to the specific exemplary embodiment. Same technical features and technical features having the same technical effect will be denoted with the same reference numeral. The embodiments shown in the accompanying figures are to be understood as purely exemplary. They are not intended to be understood to limit the present invention to these specific embodiments shown.

In the figures:
Fig. 1 shows an inventive inner phase housing in a perspective upper view;
Fig. 2 shows the inventive inner phase housing in a perspective bottom view;
Fig. 3 shows a first embodiment of an inventive assembly in a perspective upper view;
Fig. 4 shows the assembly of Fig. 3 in a perspective bottom view;
Fig. 5 shows a perspective bottom view of a second embodiment of the inventive assembly;
Fig. 6 shows a cut side view of an exemplary embodiment of an installed underground link box;
Fig. 7 shows a further embodiment of the inventive inner phase housing; and
Fig. 8 shows yet a further embodiment of the inventive inner phase housing.

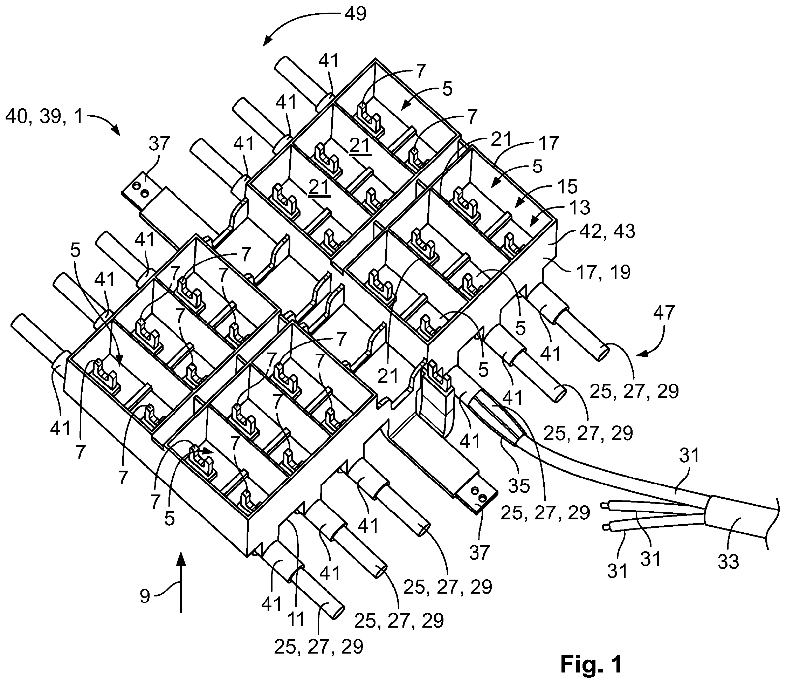

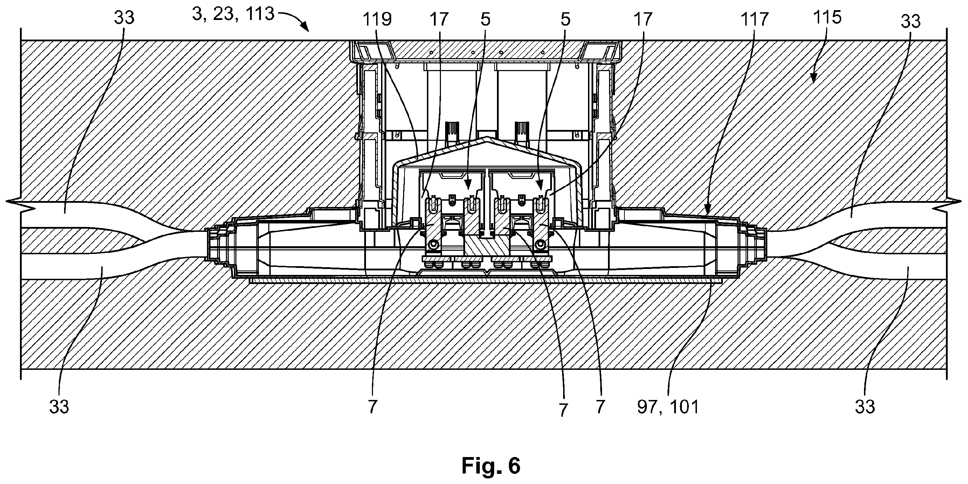

Fig. 1 shows a first embodiment of an inner phase housing 1. The inner phase housing 1 is provided for an underground link box 3 that is shown in an exemplary embodiment in Fig. 6.

The inner phase housing 1 comprises, in the embodiment shown, twelve individual phase pockets 5, wherein for the sake of visibility, only four of them are indicated by reference numerals.

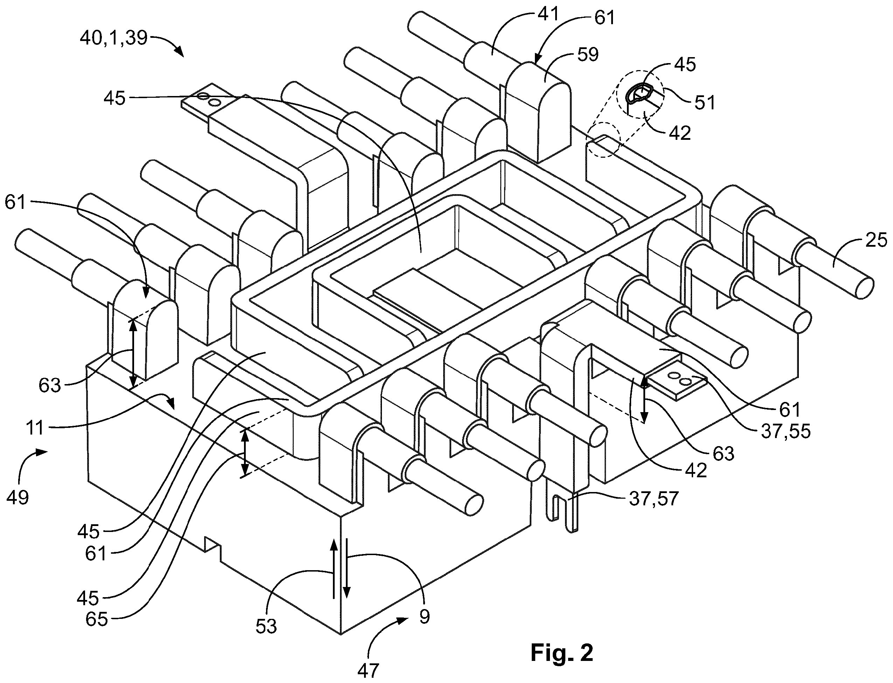

In each of the phase pockets 5 two phase link posts 7 are provided. The phase link posts 7 extend in an upward direction 9 away from a base section 11 (see also Fig. 2) of the inner phase housing 1.The base section forms a planar face 12.

Each of the phase pockets 5 opens into the upward direction 9, i.e. provide an access and maintenance opening 13. Only one of the twelve access and maintenance openings 13 is indicated with a reference numeral. Via those access and maintenance openings 13 the freestanding phase link posts 7, which may also be referred to as phase connector, are accessible for maintenance and/or assembly.

Each of the phase pockets 5 encircles a three-dimensional volume 15 that is defined by phase pocket walls 17. It is be noted that certain phase pocket walls 17 may be located adjacent to the three-dimensional volume of several phase pockets 5. Side phase pocket walls 19 extend for example over three individual phase pockets 5, wherein the intermediate phase pocket walls 21 are located in between two adjacent phase pockets 5.

It is to be emphasized that the inner phase housing 1 shown in Fig. 1 is only an exemplary embodiment. Further embodiments are conceivable having a different number of phase pockets 5 as well as a different arrangement of the phase pockets 5. The inner phase housing may thus comprise only one phase pocket 5, three individual phase pockets 5 or six individual phase pockets 5. Accordingly, different embodiments of the inner phase housing 1 may not comprise side phase pocket walls 19 and/or intermediate phase pocket walls 21 at all but may provide each phase pocket 5 with four individual phase pocket walls 17. Further, Fig. 1 shows an inner phase housing 1 for a four-way underground link box 23 (see Fig. 6). A further embodiment of the inner phase housing 1 may be adapted for being installed in a two-way underground link box (not shown) as well.

The inner phase housing 1 further comprises twelve conductor rods 25, six of them being labeled with a reference numeral in Fig. 1. The conductor rods 25 may be of round, square or rectangular cross-section. In the figures, a round, circular cross-section 27 is exemplarily shown. The conductor rods 25 may comprise aluminum, an aluminum alloy 29, copper or a copper alloy (not shown). A different number of conductor rods 25 may be comprised.

The conductor rods 25 are adapted for being connected to one phase cable 31 of a three core or four core three-phase connector cable 33, which is schematically shown in the figure.

After connecting the phase cable 31 to the corresponding conductor rod 25, the connection is secured against water ingress by a sealing member 35, e.g. heat shrinks, cold shrinks, gel, etc. (none shown in the figure). Due to the round/circular cross-section 27, the application of easy sealing members 35 is possible.

The inner phase housing 1 further comprises two ground conductors 37. Further embodiments of the inner phase housing may be embodied without such a ground conductor 37.

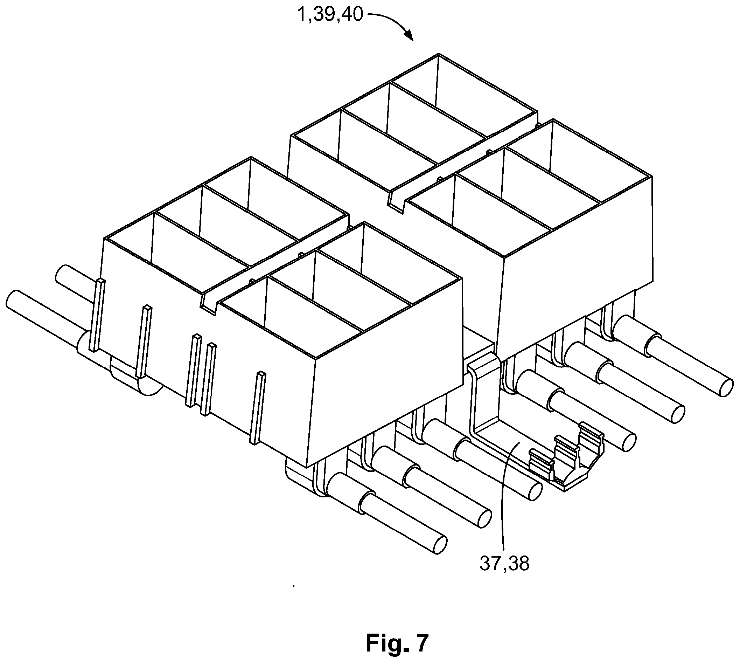

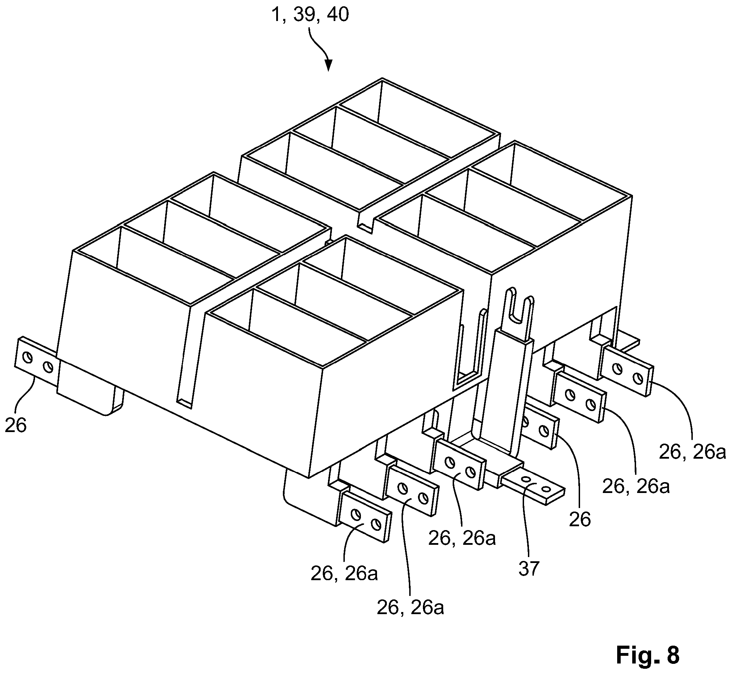

In Fig. 7 and Fig. 8, further embodiments of the inventive inner phase housing 1 are shown.

The embodiment of Fig. 7 differs from the one of Fig. 1 in that a different ground conductor 37 is applied. The ground conductor 37 shown is a feed-through ground conductor 38. A ground voltage level may therefore not be accessible via a manhole (not shown), using this embodiment of the inner phase housing 1.

The embodiment of the inner phase housing 1 shown in Fig. 8 differs from the previous embodiments in that squared conductor rods 26 are provided. Flat copper stems 26a may be applied as squared conductor rods 26 for reducing costs of the inner phase housing 1 and ultimately of the entire underground link box 3.

The conductor rods 25 are received in tubular feed-through protrusions 41. In Fig. 2 only one tubular feed-through protrusions 41 is marked with a reference numeral.

The inner phase housing 1 is a single, monolithic piece 39. Thus, the phase pockets 5, more precisely the phase pocket walls 17, the base section 11 and the tubular feed-through protrusions 41 are integrally formed by injection molding. The inner phase housing 1 is an injection moulded member 40.

The material 42 of the inner phase housing 1 may preferably be a high temperature polymer 43. Said material 42 is molded at least partially around the conductor rods 25, around the phase link posts 7 and around busbars 45 that will be described in the following with reference to Fig. 2.

In order to connect the at least one three-phase connector cable 33 provided at a first side 47 of the inner phase housing 1 with the at least one further three-phase connector cable (not shown) provided at a second side 49 of the inner phase housing 1, busbars 45 are encapsulated within the material 42 of the inner phase housing 1. This is schematically shown in a partially cut view 51 shown in Fig. 2. The busbars 45 are connected to at least one conductor rod 25 and allow for different connection schemes for connecting and/or switching the at least two three-phase connector cables 33(e.g. crossed for reducing unwanted induction). The busbars 45 are entirely encapsulated within the material 42 and may extend from the base section 11 of the inner phase housing 1 in a downward direction 53.

Although being enclosed by the material 42, Fig. 2 indicates the three individual busbars 45. Also the ground conductor 37 is partially enclosed by the material 42 of the inner phase housing 1. The ground conductor 37 has a first portion 55 extending to the first side 47 of the inner phase housing 1 and a second portion 57 extending in the upward direction 9.The ground conductor 37 comprises a right angle.

Each side 47, 49 of the inner phase housing 1 may provide such a ground conductor 37.

It is to be noted that the inner phase housing 1 shown in fig. 2 is also to be understood as an exemplary embodiment and a different number of busbars 45 as well as a different arrangement of them is conceivable in further embodiments of the inventive inner phase housing 1.

In the embodiment shown, the conductor rods 25 are oriented parallel to the base section 11, located at a distance away from said base section 11. The conductor rods 25 may either be electrically contacted by portions of the busbars 45 directly or by bridging means (not shown) entirely encapsulated within the inner phase housing 1. This contacting may occur in the conductor rod posts 59.

A lower surface 61 (noted that a bottom view as shown in Fig. 2) of the conductor rod posts 59 may be positioned at the same distance 63 as the lower surface 61 of the ground conductor 37. Said distance 63 may be larger than a second distance 65 between the lower surface 61 of the busbars 45 and the base section 11.

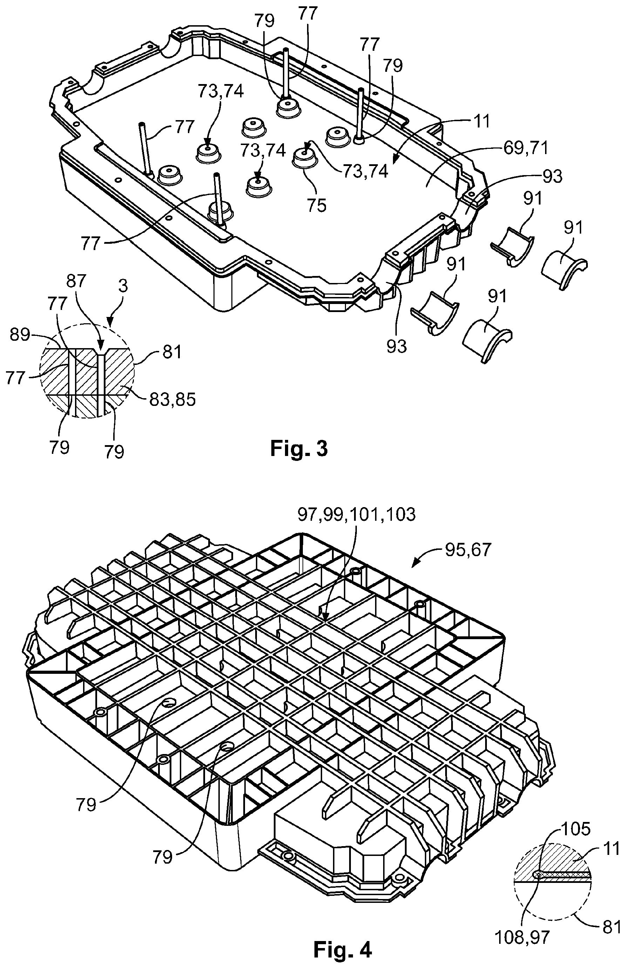

Fig 3 shows a first embodiment of the inventive assembly 67, which comprises a housing part 69 for receiving an inner phase housing 1. The housing part 69 shown is a lower housing part 71.

The housing part 69 comprises a plurality of blind holes 73 which are provided on a socket 75. Said blind holes may also be embodied as threaded blind holes 74 and are adapted for fixing the inner phase housing 1 to the lower housing part 71.

The holes therefore do not extend through the base section 11 of the lower housing part 71.

The lower housing part 71 further comprises drainage tubes 77 that are connected to drainage holes 79 that, contrary to the blind holes 73 extend through the base section 11 and are for instance visible in Fig. 4.

In the circle 81 a partially cut view of an installed underground link box 3 is shown, wherein the underground link box 3 is filled with a resin 83 or another filling medium 85. In order to allow drainage of water present above the resin 83, the drainage tubes 77, connected to the drainage holes 79 may be applied.

The drainage tubes 77 may be flush with a fill level 89 of a resin 83 as shown with the left drainage tube 77 or may provide a funnel-like structure 87 that facilitates drainage of the water.

Fig. 3 further shows reducing shims 91 that may be placed in a receiving opening 93 of the lower housing part 71 in order to allow for receiving of cables of different diameter.

In Fig. 4 the bottom 95 of the inventive assembly 67 is shown. The bottom 95 comprises a stiffening structure 97 that is embodied as a stiffening protrusion 99.

The stiffening protrusion 99 shown comprises several ribs 101 that are crossing each other and form a web 103.

In a different embodiment (not shown) of the inventive assembly 67, the stiffening structure 97 may comprise a stiffening recession, i.e. may be formed complementary to the shown ribs 101 forming the web 103.

The base 11 of the lower housing part 71 may further comprise a hollow receptacle 105, which is adapted for being filled with a hardening armoring material 107. This is schematically indicated in circle 81 in Fig. 4, where the armoring material 107 filled in the hollow receptacle 105 represents the stiffening structure 97.

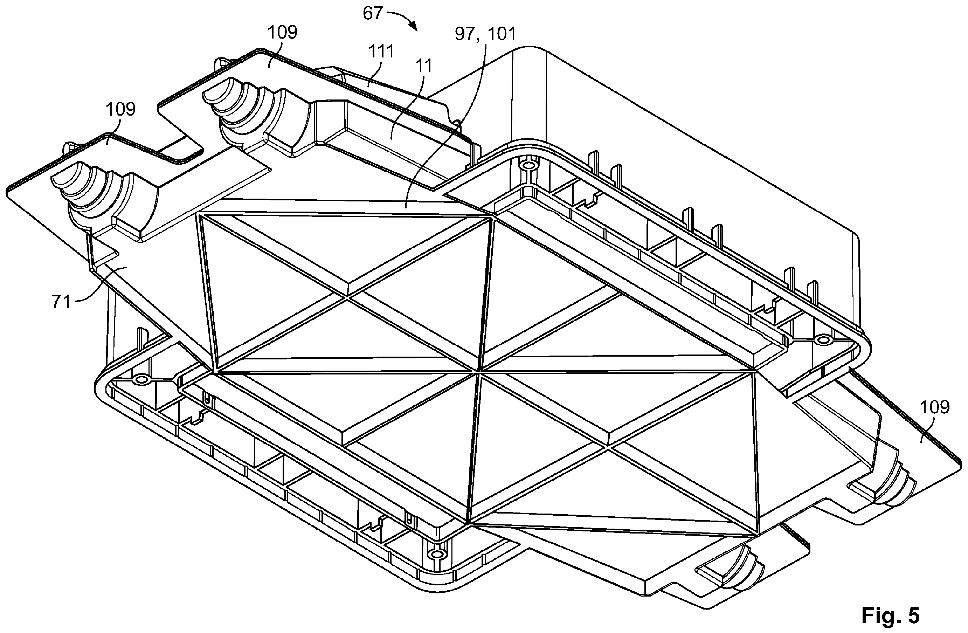

Fig. 5 shows a second embodiment of the inventive assembly 67, wherein the second embodiment differs from the first embodiment in a differently shaped stiffening structure 97, which is also embodied as ribs 101. The second embodiment comprises less ribs 101 which in addition are also arranged diagonally.

Further, the second embodiment comprises flat portions 109 that extend from the base section 11 for increasing stability of the underground link box when installed in the ground.

Fig. 5 further shows an upper housing part 111 attached to the lower housing part 71.

Finally, Fig. 6 shows an underground link box 3 in an installed state 113, in which it is placed underground and surrounded by earth or ground 115. Schematically, two bend three-phase connector cables 33 are shown on each side of the underground link box 3, indicating that a four-way underground link box 23 is shown. In the correct installed state, those cables 33 are of course oriented parallel to each other.

The stiffening structure 97 embodied as ribs 101 prevent the underground link box 3 from bending or flexing if a torsional force 117 (exemplary only one possible torsional force 117 is shown) acts on the underground link box 3. An additional foundation is not necessary.

The phase link posts 7 are shown, whereas the inner phase housing 1 is only partially shown (phase pocket walls 17 below a diving bell lid 119).

It is be noted that the arrangement of the phase pockets 5 shown in Fig. 6 differs from the embodiment of the previously shown inner phase housing 1. However, an underground link box 3 may also be provided with the inventive inner phase housing 1 shown in the previous figures.

### Reference Signs

- 1: inner phase housing
- 3: underground link box
- 5: phase pocket
- 7: phase link post
- 9: upward direction
- 11: base section
- 12: planar face
- 13: access and maintenance opening
- 15: three dimensional volume
- 17: phase pocket wall
- 19: side face pocket wall
- 21: intermediate phase pocket wall
- 23: four-way underground link box
- 25: conductor rod
- 26: squared conductor rod
- 26a: flat copper stem
- 27: round/circular cross-section
- 29: Aluminum or Aluminum alloy
- 31: phase cable
- 33: three-phase connector cable
- 35: sealing member
- 37: ground conductor
- 38: feed-through ground conductor
- 39: single, monolithic piece
- 40: injection moulded member
- 41: tubular feed-through protrusion
- 42: material
- 43: high-temperature polymer
- 45: busbar
- 47: first side
- 49: second side
- 51: partially cut view
- 53: downward direction
- 55: first portion
- 57: second portion
- 59: conductor rod post
- 61: lower surface
- 63: distance
- 65: second distance
- 67: assembly
- 69: housing part
- 71: lower housing part
- 73: blind hole
- 74: threaded blind hole
- 75: socket
- 77: drainage tubes
- 79: drainage holes
- 81: circle
- 83: resin
- 85: filling medium
- 87: funnel-like structure
- 89: fill level
- 91: reducing shim
- 93: receiving opening
- 95: bottom
- 97: stiffening structure
- 99: stiffening protrusion
- 101: rib
- 103: web
- 105: hollow receptacle
- 107: armoring material
- 109: flat portion
- 111: upper housing part
- 113: installed state
- 115: earth/ground
- 117: torsional force
- 119: diving bell lid

## Claims

1. Inner phase housing (1) for an underground link box (3), the inner phase housing (1) comprising:
- at least one phase pocket (5) in which phase link posts (7) are provided,
- a plurality of conductor rods (25) for connecting at least two low-voltage cables (33), and
- a base section (11) to which the at least one phase pocket (5) is mounted,
**characterized in that** the inner phase housing (1) is formed as a single, monolithic piece (39) injection molded around the phase link posts (7) and the conductor rods (25) and **in that** tubular feed-through protrusions (41), each for receiving a conductor rod (25), are integrally formed by the inner phase housing (1), the feed-through protrusions (41) protruding outwards away from the base section (11) of the inner phase housing (1).

2. Inner phase housing (1) according to claim 1, **characterized in that** portions of the conductor rods (25) are completely encapsulated by the tubular feed-through protrusions (41).

3. Inner phase housing (1) according to claim 1 or 2, **characterized in that** busbars (45) are provided.

4. Inner phase housing (1) according to claim 3, **characterized in that** the busbars (45) are integrated into the base section (11) of the inner phase housing (1) and **in that** the encapsulated busbars (45) protrude from a bottom (95) of the base section (11).

5. Assembly (67) for an underground link box (3), comprising a housing part (69) for receiving an inner phase housing (1), **characterized in that** the inner phase housing (1) is configured according to any one of claims 1 to 4.

6. Assembly (67) according to claim 5, **characterized in that** a lower housing part (71) and an upper housing part (111) are comprised for receiving the inner phase housing (1).

7. Assembly (67) according to claim 6, **characterized in that** a stiffening structure (97) is integrally formed with the lower housing part (71) and/or the upper housing part (111) at a planar face (12) thereof.

8. Assembly (67) according to claim 7, **characterized in that** the stiffening structure (97) comprises at least one stiffening protrusion (99) and/or at least one stiffening recession.

9. Assembly (67) according to claim 7 or 8, **characterized in that** the stiffening structure (97) comprises a hollow receptacle (105), which is adapted for being filled with a hardening armoring material (107).

10. Assembly (67) according to any one of claims 7 to 9, **characterized in that** the stiffening structure (97) comprises at least one rib (101) protruding away from the housing part (69) and/or at least one trough-like depression deepened into the housing part (69), the rib (11) and/or depression being integrally formed with the housing part (69).

11. Assembly (67) according to any one of claims 6 to 10, **characterized in that** the lower housing part (71) comprises at least one of a blind hole (73) and a threaded blind hole (74) for fixing the inner phase housing (1) to the lower housing part (71).

12. Assembly (67) according to any one of claims 6 to 11, **characterized in that** drainage tubes (77) are provided that are connectable to drainage holes (79) of the lower housing part (71).

13. Assembly (67) according to claim 12, **characterized in that** the drainage tubes (77) extend from the lower housing part (71) and are adapted to extend to a resin fill level (89) of a resin-filled underground link box (3).

14. Assembly (67) according to any one of claims 6 to 12, **characterized in that** at least one cable reducing shim (91) is provided, which is adapted to be inserted into a cable-receiving opening (93) of the lower housing part (31).

## Patentansprüche

1. Inneres Phasengehäuse (1) für einen unterirdischen Verteilerkasten (3), wobei das innere Phasengehäuse (1) umfasst:
- wenigstens ein Phasen-Fach (5), in dem Phasen-Verbindungsklemmen (7) vorhanden sind,
- eine Vielzahl von Leiterstäben (25) zum Anschließen wenigstens zweier Niederspannungs-kabel (33), und
- einen Sockelabschnitt (11), an dem das wenigstens eine Phasenfach (5) angebracht ist,
**dadurch gekennzeichnet, dass** das innere Phasengehäuse (1) als ein einzelnes monolithisches Teil (39), das um die Phasen-Verbindungsklemmen (7) und die Leiterstäbe (25) spritzgegossen ist, ausgebildet ist, und dadurch, dass röhrenförmige Durchführungs-Vorsprünge (41), die jeweils zum Aufnehmen eines Leiterstabes (25) dienen, integral durch das innere Phasengehäuse (1) gebildet werden, wobei die Durchführungs-Vorsprünge (41) von dem Sockelabschnitt (11) des inneren Phasengehäuses (1) weg nach außen vorstehen.

2. Inneres Phasengehäuse (1) nach Anspruch 1, **dadurch gekennzeichnet, dass** Abschnitte der Leiterstäbe (25) vollständig von den röhrenförmigen Durchführungs-Vorsprüngen (41) umschlossen sind.

3. Inneres Phasengehäuse (1) nach Anspruch 1 oder 2, **dadurch gekennzeichnet, dass** Sammelschienen (45) vorhanden sind.

4. Inneres Phasengehäuse (1) nach Anspruch 3, **dadurch gekennzeichnet, dass** die Sammelschienen (45) in den Sockelabschnitt (11) des inneren Phasengehäuses (1) integriert sind und dadurch, dass die umschlossenen Sammelschienen (45) von einem Boden (95) des Sockelabschnitts (11) vorstehen.

5. Baugruppe (67) für einen unterirdischen Verteilerkasten (3), die einen Gehäuseteil (69) zum Aufnehmen eines inneren Phasengehäuses (1) umfasst, **dadurch gekennzeichnet, dass** das innere Phasengehäuse (1) nach einem der Ansprüche 1 bis 4 ausgeführt ist.

6. Baugruppe (67) nach Anspruch 5, **dadurch gekennzeichnet, dass** ein unteres Gehäuseteil (71) und ein oberes Gehäuseteil (111) zum Aufnehmen des inneren Phasengehäuses (1) enthalten sind.

7. Baugruppe (67) nach Anspruch 6, **dadurch gekennzeichnet, dass** eine Versteifungsstruktur (97) integral mit dem unteren Gehäuseteil (71) und/oder dem oberen Gehäuseteil (111) an einer planen Fläche (12) derselben/desselben ausgebildet ist.

8. Baugruppe (67) nach Anspruch 7, **dadurch gekennzeichnet, dass** die Versteifungsstruktur (97) wenigstens einen Versteifungsvorsprung (99) und/oder wenigstens eine Versteifungsaussparung aufweist.

9. Baugruppe (67) nach Anspruch 7 oder 8, **dadurch gekennzeichnet, dass** die Versteifungsstruktur (97) eine hohle Aufnahme (105) umfasst, die zum Füllen mit einem aushärtenden Bewehrungsmaterial (107) eingerichtet ist.

10. Baugruppe (67) nach einem der Ansprüche 7 bis 9, **dadurch gekennzeichnet, dass** die Versteifungsstruktur (97) wenigstens eine von dem Gehäuseteil (69) weg vorstehende Rippe (101) und/oder wenigstens eine in das Gehäuseteil (69) ausgetiefte muldenförmige Vertiefung aufweist, wobei die Rippe (11) und/oder die Vertiefung integral mit dem Gehäuseteil (69) ausgebildet sind/ist.

11. Baugruppe (67) nach einem der Ansprüche 6 bis 10, **dadurch gekennzeichnet, dass** das untere Gehäuseteil (71) ein Sackloch (73) oder/und ein Gewindesackloch (74) zum Befestigen des inneren Phasengehäuses (1) an dem unteren Gehäuseteil (71) umfasst.

12. Baugruppe (67) nach einem der Ansprüche 6 bis 11, **dadurch gekennzeichnet, dass** Ablaufröhren (77) vorhanden sind, die mit Ablauflöchern (79) des unteren Gehäuseteils (71) verbunden werden können.

13. Baugruppe (67) nach Anspruch 12, **dadurch gekennzeichnet, dass** sich die Ablaufröhren (77) von dem unteren Gehäuseteil (71) aus erstrecken und so eingerichtet sind, dass sie sich bis zu einer Kunststoff-Füllhöhe (89) eines mit Kunststoff gefüllten unterirdischen Verteilerkastens (3) erstrecken.

14. Baugruppe (67) nach einem der Ansprüche 6 bis 12, **dadurch gekennzeichnet, dass** wenigstens eine Kabel-Reduzierhülse (91) vorhanden ist, die zum Einführen in eine Kabel-Aufnahmeöffnung (93) des unteren Gehäuseteils (31) eingerichtet ist.

## Revendications

1. Logement de phase interne (1) pour un boîtier de liaison souterraine (3), le logement de phase interne (1) comprenant :
- au moins une poche de phase (5) dans laquelle sont prévus des montants de liaison de phase (7),
- une pluralité de tiges conductrices (25) pour connecter au moins deux câbles basse tension (33), et
- une section de base (11) sur laquelle est montée ladite au moins une poche de phase (5),
**caractérisé en ce que** le logement de phase interne (1) est constitué d'une seule pièce monolithique (39) moulée par injection autour des montants de liaison de phase (7) et des tiges conductrices (25), et **en ce que** des saillies de traversée tubulaires (41), destinées chacune à recevoir une tige conductrice (25), sont formées d'un seul tenant par logement de phase interne (1), lesdites saillies de traversée tubulaires (41) font saillie vers l'extérieur à partir de la section de base (11) du logement de phase interne (1).

2. Logement de phase interne (1) selon la revendication 1, **caractérisé en ce que** des parties des tiges conductrices (25) sont complètement encapsulées par les saillies de traversée tubulaires (41).

3. Logement de phase interne (1) selon les revendications 1 ou 2, **caractérisé en ce que** des barres omnibus (45) sont prévues.

4. Logement de phase interne (1) selon la revendication 3, **caractérisé en ce que** les barres omnibus (45) sont intégrées dans la partie de base (11) du logement de phase interne (1) et **en ce que** les barres omnibus encapsulées (45) font saillie à partir d'un fond (95) de la partie de base (11).

5. Ensemble (67) pour un boîtier de liaison souterraine (3), comprenant une partie logement (69) destinée à recevoir un logement de phase interne (1), **caractérisé en ce que** le logement de phase interne (1) est configuré selon l'une quelconque des revendications 1 à 4.

6. Ensemble (67) selon la revendication 5, **caractérisé en ce qu'**il comprend une partie inférieure de logement (71) et une partie supérieure de logement (111) destinées à recevoir le logement de phase interne (1).

7. Ensemble (67) selon la revendication 6, **caractérisé en ce qu'**une structure de raidissement (97) est formée d'un seul tenant avec la partie inférieure du logement (71) et/ou la partie supérieure du logement (111) au niveau d'une face plane (12) de celle-ci.

8. Ensemble (67) selon la revendication 7, **caractérisé en ce que** la structure de raidissement (97) comprend au moins une saillie de raidissement (99) et/ou au moins une dépression de raidissement.

9. Ensemble (67) selon les revendications 7 ou 8, **caractérisé en ce que** la structure de raidissement (97) comprend un réceptacle creux (105) qui est adapté pour être rempli d'un matériau de blindage durcissable (107).

10. Ensemble (67) selon l'une quelconque des revendications 7 à 9, **caractérisé en ce que** la structure de raidissement (97) comprend au moins une nervure (101) faisant saillie à partir de la partie logement (69) et/ou au moins une dépression en forme de cuvette creusé dans la partie logement (69), la nervure (11) et/ou le renfoncement étant formés d'un seul tenant avec la partie logement (69).

11. Ensemble (67) selon l'une quelconque des revendications 6 à 10, **caractérisé en ce que** la partie inférieure du logement (71) comprend au moins un trou borgne (73) et un trou borgne fileté (74) pour fixer le logement de phase interne (1) à la partie inférieure du logement (71).

12. Ensemble (67) selon l'une quelconque des revendications 6 à 11, **caractérisé en ce que** des tubes de drainage (77) sont prévus, qui peuvent être raccordés à des trous de drainage (79) de la partie inférieure du logement (71).

13. Ensemble (67) selon la revendication 12, **caractérisé en ce que** les tubes de drainage (77) s'étendent depuis la partie inférieure du logement (71) et sont conçus pour s'étendre jusqu'à un niveau de remplissage de résine (89) d'un boîtier de liaison souterraine (3) rempli de résine.

14. Ensemble (67) selon l'une quelconque des revendications 6 à 12, **caractérisé en ce qu'**au moins une cale de réduction de câble (91) est prévue, qui est conçue pour être insérée dans une ouverture de réception de câble (93) de la partie inférieure du logement (31).
